# EUROPEAN PATENT SPECIFICATION

(11) **EP 2 602 173 B1**
(45) Date of publication and mention of the grant of the patent: **27.04.2016**
(21) Application number: 12195513.2
(22) Date of filing: 04.12.2012
(51) Int. Cl.: B62D 25/10

(54) **Framework structure of trunk lid**
Rahmenstruktur einer Heckklappe
Structure de cadre de couvercle de coffre

(30) Priority: 06.12.2011 JP 2011266654
(43) Date of publication of application: 12.06.2013
(73) Proprietor: Mitsubishi Jidosha Kogyo K.K., Tokyo 108-8410 (JP); Mitsubishi Jidosha Engineering K.K., Aichi 444-8501 (JP)
(72) Inventor: Nakamura, Yoshihiro, 444-8501 Okazaki-shi, Aichi (JP); Yui, Kenji, 444-8501 Okazaki-shi, Aichi (JP); Katagiri, Yusuke, 444-8501 Okazaki-shi, Aichi (JP); Honda, Shoichi, 444-8501 Okazaki-shi, Aichi (JP)
(74) Representative: Vossius & Partner Patentanwälte Rechtsanwälte mbB

(56) References cited:
- EP-A1- 0 635 416
- EP-A1- 2 019 025
- DE-A1-102009 021 858
- DE-U1-202005 002 887

## Description

The present invention relates to a framework structure of a trunk lid that is provided in an automobile.

In general, a trunk provided in a rear portion of a vehicle body of an automobile is provided with a trunk lid that has a surface (an upper surface) which covers an opening of the trunk from the top, and a surface (a rear surface) that covers the opening from the rear. The trunk lid is fixed to the rear portion of the vehicle body.via a hinge that is connected to the back side of the upper surface of the trunk lid, and is provided so as to allow opening and closing the opening by being rotated around a rotation axis of the hinge. Furthermore, the trunk lid is kept in a complete closed state by a latch mechanism including a striker that is provided at the vehicle body.side and a latch that is provided at the trunk lid side.

When a driver or the like accesses the trunk, after releasing the latch of the trunk lid, the driver puts fingers on a lower end of the rear surface of the trunk lid and in the vicinity of the latch or the like, rotates the trunk lid upward, and opens the trunk lid. Furthermore, when closing the trunk, the driver puts fingers on the upper surface of the trunk lid and a corner portion of a boundary between the upper surface and the rear surface of the trunk lid, rotates the trunk lid downward, and closes the trunk lid.

In this way, since the trunk lid is rotated around the rotation axis, a stress concentration is generated in a connection portion between the trunk rid and the hinge at the time of the opening and closing operation, and thus deflection and deformation may occur. For that reason, for example, JP-A-2009-29290 discloses a technique that enhances rigidity of the entire trunk lid. In this technique, in an inner panel of the trunk lid, left and right bead portions are provided so as to be extended between left and right hinge attachment portions (connection portions) and a lock attachment portion (latch) and are formed in a substantially V shape. Furthermore, fixing portions of hinge arms, which are fixed to the left and right hinge attachment portions are obliquely provided along extension directions of the left and right hinge portions.

Furthermore, in order to suppress the occurrence of deflection and deformation.of the trunk lid, a method is considered which is provided with a reinforcing member in a portion (that is, the connection portion between the trunk lid and the hinge), on which stress is concentrated when performing the opening and closing operations of the trunk lid, to partially enhance rigidity, and to disperse.stress to the entire trunk lid via the reinforcing member.

In order to suppress deflection and deformation of the trunk lid by providing the reinforcing member in the connection portion between the trunk lid and the hinge as mentioned above, it is required that the.reinforcing member has a size and a thickness capable of withstanding the stress concentration. Furthermore, even when dispersing the stress to the entire trunk lid via the reinforcing member, it is preferable that the reinforcing member is large. However, an increase in the size of the reinforcing member causes an increase in the weight, which also leads to an increase in the cost. Furthermore, in the structure disclosed in JP-A-2009-29290, since the left and right bead portions are extended between the left and right hinge attachment portions and the lock attachment portion and are formed in a substantially V shape, rigidity of the corner portion of the lower side of the trunk lid is weakened, and torsion may occur when performing the opening and closing operations of the trunk lid.

EP 0 635 416 A1 discloses a rear luggage compartment door having an outer panel, an inner panel and an infill panel joining the inner and outer panels and providing a seat for a lamp cluster. The joint between the outer panel and the infill panel is concealed when the lamp cluster is in place.

EP 2 019 025 A1 discloses a frame structure of a trunk lid. The trunk lid has an outer panel and an inner panel, and is formed such that its cross-section is approximately L-shaped, with a top face part and a rear face part. Left and right hinge installation sections are provided, and a lock installation section is provided in the left to right center of the rear face part. Left and right beading parts are provided on the inner panel, and fastening parts of hinge arms are arranged diagonally along the lengthwise direction of the left and right beading parts.

The present invention has been made in view of the problem, and an object thereof is to provide a framework structure of the trunk lid that is able to secure rigidity of the entire trunk lid and effectively disperse stress.

In addition, another object of the present invention is to exhibit a functional effect that is guided by the respective configurations illustrated in a best mode for carrying out the present invention described later but is not obtained by the conventional art, without being limited to the object mentioned above.

According to the invention, there is provided a framework structure of a trunk lid, the trunk lid which includes an inner panel that includes: an upper surface portion which covers an opening of a trunk provided in a rear portion of a vehicle body an automobile from an upper side of the vehicle body; and a rear surface portion which covers the opening from a rear side of the vehicle body, a rear end of the upper surface portion being connected to an upper end of the rear surface portion, the trunk lid which is fixed to the rear portion of the vehicle body via hinges which are provided at both end portions in a vehicle width direction of a front side of the upper surface portion of the inner panel and each of which is connected to the inner panel at a connection portion, the trunk lid which is operable to allow opening and closing of the opening of the trunk, characterized in that the inner panel includes: a main frame that is extended between the connection portion and a lower corner portion of the rear surface portion along both edges in the vehicle width direction of the upper surface portion and the rear surface portion; and an auxiliary frame that is disposed inside the main frame in the vehicle width direction in the upper surface portion and the rear surface portion, and the auxiliary frame includes a first auxiliary frame that includes: an upper surface oblique side portion which is extended from a vicinity of the connection portion to an inside in the vehicle width direction and to the rear side of the vehicle body, in the upper surface portion; and a rear surface oblique side portion which is extended from a vicinity of the main frame, which is extended to the rear surface portion, to the inside in the vehicle width direction and to the upper side of the vehicle body, in the rear surface portion, and the upper surface oblique side portion and the rear surface oblique side portion are connected to each other in a boundary between the upper surface portion and the rear surface portion.

The trunk lid may include a reinforcement member, which is connected to the hinge with the main frame interposed between the reinforcement member and the hinge at the connection portion, in the upper surface portion, and the reinforcement member may include: a first joining portion that is joined to the main frame; and a second joining portion that is joined to the first auxiliary frame.

The first joining portion may include at least two joining portions, and the at least two joining portions may be provided to interpose the connection portion between the at least two joining portions in a vehicle front and rear direction.

The first auxiliary frame may include two frames provided at both sides in the vehicle widthwise direction, and the auxiliary frame may include a central frame that is connected to connection portions of the two frames at which the upper surface oblique side portion and the rear surface oblique side portion are connected to each other.

The central frame may be extended in the boundary between the upper surface portion and the rear surface portion in the vehicle width direction.

The trunk lid may include a latch for keeping a complete close state of the opening of the trunk, in the rear surface portion, and the auxiliary frame may include a second auxiliary frame that is connected to the central frame and the latch.

The trunk lid may include a latch for keeping a complete close state of the opening of the trunk, in the rear surface portion, the auxiliary frame may include two second auxiliary frames that are connected to the central frame, and the latch may be arranged between the two second auxiliary frames.

When performing opening and closing operations of the trunk lid, stress is concentrated on the connection portion between the inner panel of the trunk lid and the hinge. According to the framework structure of the disclosed trunk lid, it is possible to transmit the stress to the main frame that is extended between the connection portion between the inner panel and the hinge and the lower corner portion of the rear surface portion, and the auxiliary frame including the upper surface oblique side portion extended from the vicinity of the connection portion provided in the upper surface portion to the inside in the vehicle width direction and to the rear side, along both edges of the inner panel in the vehicle width direction.

For that reason, it is possible to effectively distribute the stress from the main frame and the auxiliary frame to the entire upper surface portion of the inner panel. Furthermore, the auxiliary frame has a rear surface oblique side portion that is extended from the vicinity of the main frame, which is provided in the rear surface portion and extended in the rear surface portion, to the inside in the vehicle width direction and to the upper side. Moreover, since the rear surface oblique side portion and the upper surface oblique side portion are connected to each other in a boundary between the upper surface portion and the rear surface portion, it is also possible to distribute the stress, which is transmitted to the upper surface oblique side portion of the auxiliary frame, to the rear surface portion via the rear surface oblique side portion. That is, the stress can be diffused to the entire inner panel.

Furthermore, it is possible to improve torsional rigidity and bending rigidity near the lower corner portion of the rear surface portion of the trunk lid by the main frame extended to the lower corner portion of the rear surface portion and the auxiliary frame including the rear surface oblique side portion. In addition, the upper surface oblique side portion and the rear surface oblique side portion of the auxiliary frame are connected to each other in the boundary between the upper surface portion and the rear surface portion in the inside in the vehicle width direction. That is, the auxiliary frame is formed in a substantially V shape by the upper surface oblique side portion and the rear surface oblique side portion, and a substantially triangular framework is provided in the inner panel by the main frame provided along the edge of the inner panel and the auxiliary frame formed in a substantially V shape. Thus, it is possible to improve rigidity of the entire trunk lid. Furthermore, it is possible to reduce the thickness of the inner panel by the improvement in rigidity of the entire trunk lid.

### BRIEF DESCRIPTION OF THE DRAWINGS

Fig. 1 is a perspective view that illustrates an example of a rear portion of an automobile that includes a trunk lid.
Fig. 2 is an exploded perspective view of the trunk lid related to an embodiment.
Fig. 3 is a schematic perspective view that illustrates a framework structure of the trunk lid illustrated in Fig. 2.
Figs. 4A and 4B illustrate a framework of the trunk lid and a connection portion between a hinge and a reinforcement, illustrated in Fig. 2, Fig. 4A is a plan view, and Fig. 4B is a cross-sectional view taken from a line A-A of Fig. 4A.

Hereinafter, an embodiment will be described based on the drawings. In addition, the embodiment described below is merely an example, and it is not intended to exclude applications of various modifications and techniques that are not specified in the embodiment described below.

### 1. Overall Configuration

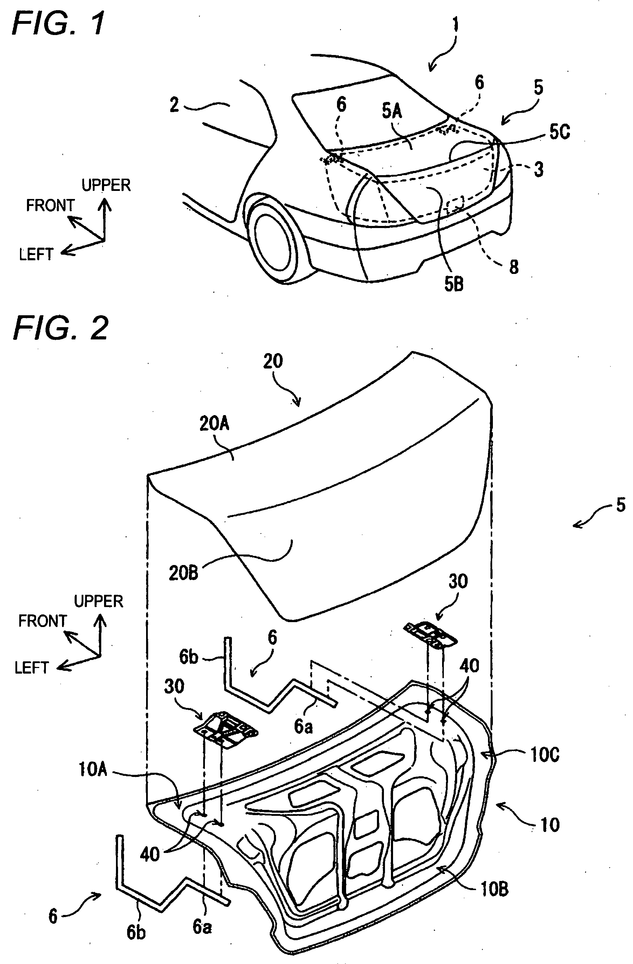

A framework structure of a trunk lid related to the present embodiment will be described using Figs. 1 to 4B. In the description described below, the description will be made by setting an advancing direction of an automobile (a vehicle) to a front side, defining left and right sides based on the front side, setting a direction of gravity to a lower side, and setting a direction opposite to the direction of the gravity to an upper side. Furthermore, the description will be made by setting a side facing a center of a vehicle body to inside, and setting an opposite to the inside to outside. Furthermore, terms "horizontal" and "vertical" in the description do not strictly mean horizontal and vertical, but mean substantially horizontal and substantially vertical in which errors and slopes are somewhat allowed.

As illustrated in Fig. 1, in a rear portion of a vehicle body 1 of an automobile, a trunk (a loading chamber) 3'which is separated from a vehicle interior 2, and a trunk lid 5 which covers an opening of the trunk 3, are provided. The trunk lid 5 is a lid member which includes a horizontal upper surface portion 5A that covers the opening of the trunk 3 from the upper side, and a rear surface portion 5B that is continuously formed so as to be bent to the lower side from a rear end of the upper surface portion 5A and that covers the opening of the trunk 3 from a rear side. In addition, the rear end of the upper surface portion 5A (which is a boundary between the upper surface portion 5A and the rear surface portion 5B) is also referred to as an upper surface rear end corner portion 5C.

That is, the trunk lid 5 has a vertical cross-section of a substantially L shape in a direction perpendicular to a vehicle width direction (a left and right direction of the vehicle body 1). Furthermore, the trunk lid 5 is configured so that the upper surface portion 5A has a substantially rectangular shape having a long side in the vehicle width direction when viewed from a plane, and the rear surface portion 5B has a substantially isosceles trapezoidal shape in which an upper end side (a side of the rear end of the upper surface portion 5A) is longer than a lower end side when viewed from a rear (when viewed from the rear side of the vehicle body), and the trunk lid 5 has a symmetrical shape using a center in the vehicle width direction as a central line.

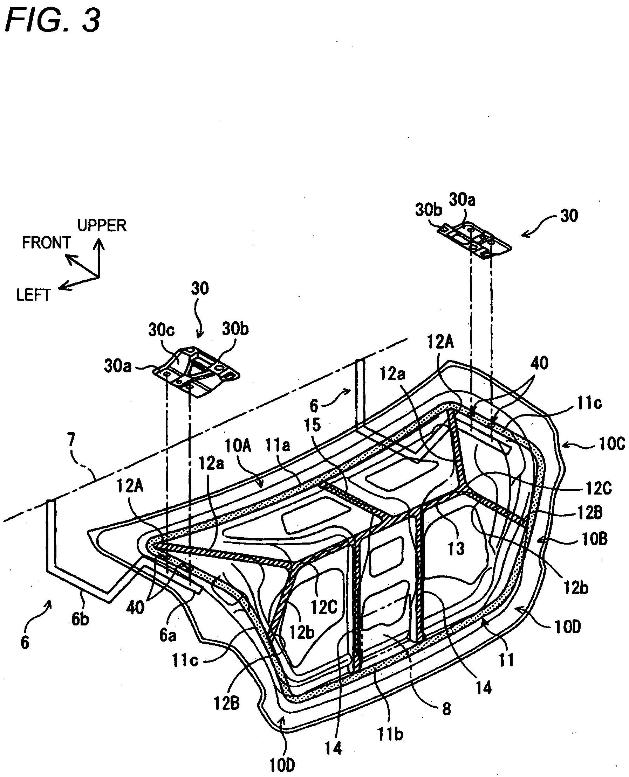

A pair of hinges 6 and 6 provided in both end portions of the rear portion of the vehicle body 1 in the vehicle width direction are connected to the front edge of the trunk lid 5, and the trunk lid 5 is fixed to the rear portion of the vehicle body 1 via the hinges 6 and 6. The trunk lid 5 is provided in a rotatable manner around a rotational axis 7 (see Fig. 3) of the hinges 6 and 6 in an upper and lower direction (vertical direction). A latch 8 is provided in a central lower portion of the rear surface portion 5B of the trunk lid 5, and a striker (not illustrated) is provided at the vehicle body 1 side facing the latch 8. A latch mechanism for keeping the completely closed state of the trunk lid 5 includes the latch 8 and the striker. In addition, since a well-known mechanism can be applied as the latch mechanism, the details thereof are omitted. Furthermore, the position of the latch 8 is not limited thereto.

As illustrated in Fig. 2, the trunk lid 5 includes an inner panel 10 located inside the vehicle body 1, an outer panel 20 located outside the vehicle body 1, and a pair of reinforcements (reinforcing members) 30 and 30 that are joined to the inner panel 10.

The inner panel 10 includes a horizontal upper surface portion 10A that covers the opening of the trunk 3 from the upper side, and a rear surface portion 10B that is continuously formed so as to be bent to the lower side a rear end (that is, the upper surface rear end corner portion 10C) of the upper surface portion 10A and that covers the opening from the rear side of the vehicle body 1. In other words, the rear end of the upper surface portion 10A is connected to an upper end of the rear surface portion 10B, and a vertical cross-section along the vehicle front and rear direction (a front and rear direction of the vehicle body 1) is formed in a substantially L shape. The inner panel 10 is a main member of the trunk lid 5, and is formed to have substantially the same outer shape as that of the trunk lid 5. Fixing portions 6a of the hinges 6 are each connected to the inner panel 10 on a back surface (that is, a surface of the trunk 3 side) of the upper surface portion 10A in the both end portions of the vehicle width direction.

The outer panel 20 includes a horizontal upper surface portion 20A that is overlapped with the upper surface portion 10A of the inner panel 10 from the upper side, and a rear surface portion 20B that is overlapped with the rear surface portion 10B of the inner panel 10 from the lower side, and a vertical cross-section along the vehicle front and rear direction is formed in a substantially L shape. The outer panel 20 is a main member of the trunk lid 5 similar to the inner panel 10, and is formed to have substantially the same outer shape as that of the trunk lid 5. The outer panel is overlapped on the inner panel 10, and is joined to the inner panel 10, to thereby constitute an outer surface (that is, a decorative surface that is an outer surface of the vehicle body 1) of the trunk lid 5.

The reinforcement 30 is a member that is joined to the upper surface portion 10A of the inner panel 10 to reinforce a portion (hereinafter, referred to as a stress concentration location) on which the stress is concentrated when performing the opening and closing operations of the trunk lid 5. Herein, the stress concentration location is a portion (that is, connection portions 40 and 40 between the front side of the upper surface portion 10A of the inner panel 10 and the fixing portions 6a and 6a of the hinges 6 and 6) in which the inner panel 10 and the pair of hinges 6 and 6 are connected to each other, and the pair of reinforcements 30 and 30 are provided in a portion including the connection portions 40 and 40.

In case that the opening operation of the trunk lid 5 is performed, when upward force is applied to the trunk lid 5 from the lower end of the rear surface portion 5B of the trunk lid 5 by a driver, and the trunk lid 5 is rotated upward, since the trunk lid 5 is rotated around the rotational axis 7 of the hinges 6 and 6, the force applied by the driver is concentrated on the connection portions 40 and 40 between the inner panel 10 and the hinges 6 and 6. For example, at this time, the connection portions 40 and 40 between the inner panel 10 and the hinges 6 and 6 are the stress concentration locations.

Similarly, in case that the closing operation of the trunk lid 5 is performed, when downward force is applied to the trunk lid 5 from the upper surface portion 5A of the trunk lid 5 or a corner portion of the boundary between the upper surface portion 5A and the rear surface portion 5B by the driver, and the trunk lid 5 is rotated downward, since the trunk lid 5 is rotated around the rotational axis 7 of the hinges 6 and 6, the force applied by the driver is concentrated on the connection portions 40 and 40. At this time, the connection portions 40 and 40 between the inner panel 10 and the hinges 6 are the stress concentration locations.

The hinge 6 is a member that is connected to the vehicle body 1 and the trunk lid 5, and as illustrated in Figs. 2 and 3, includes a fixing portion 6a that is connected to the trunk lid 5, and a hinge arm portion 6b that is extended between the rotational axis 7 and the fixing portion 6a. The fixing portion 6a is a portion that is connected to the upper surface portion 10A of the inner panel 10 as mentioned above, is horizontally provided so as to follow the back surface of the upper surface portion 10A, and is extended in the vehicle front and rear direction.

The hinge arm portion 6b includes a portion extending to the lower side from a front end portion of the fixing portion 6a, a portion extending to the lower side from the rotational axis 7, and a portion that is connected to the portions. The hinge arm portion 6b is formed in a convex shape projecting to the lower side so as to avoid the interference with the vehicle body 1 when the trunk lid 5 is opened. The rotational axis 7 is an axis that connects the connection portion between the right hinge 6 and the vehicle body 1 with the connection portion between the left hinge 6 and the vehicle body 1, and is illustrated by an alternating long and short dash line in Fig. 3. In addition, the configuration of the hinge 6 is not limited thereto and is able to adopt well-known configurations.

### 2. Framework Structure of Trunk Lid

### 2-1. Framework Structure

As illustrated in Fig. 3, the inner panel 10 includes a main frame 11 and auxiliary frames 12 to 15, which form a framework of the trunk lid 5. In addition, in Fig. 3, in order to easily understand the structure of the framework, on the surface of the inner panel 10, a portion in which the main frame 11 is provided is indicated by a dotted region, and a portion in which the auxiliary frames 12 to 15 are provided is indicated by an oblique line region. Furthermore, the main frame 11 and the auxiliary frames 12 to 15 may be configured by welding a separate member (a framework member) to the inner panel 10, for example, using welding or the like. Otherwise, a portion forming the framework may be formed by processing the shape of the inner panel 10 itself.

The main frame 11 is a framework member that is provided along an outer periphery of the inner panel 10. That is, the main frame 11 includes an upper surface front portion 11a that is extended in the vehicle width direction at the front side of the upper surface portion 10A of the inner panel 10, a rear surface lower portion 11b that is extended in the vehicle width direction at the lower side of the rear surface portion 10B, and side portions 11c and 11c that are connected to end portions of the upper surface front portion 11a and the rear surface lower portion 11b in the vehicle width direction, and that are extended along both edges of the upper surface portion 10A and the rear surface portion 10B in the vehicle width direction.

The side portion 11c of the main frame 11 is provided to include the connection portion 40 between the inner panel 10 and the hinge 6 in the upper surface portion 10A, and is extended to the vicinity of a lower corner portion 10D in the rear surface portion 10B. That is, a vertical cross-section of each of the side portions 11c and 11C of the main frame 11 along both edges of the inner panel 10 in the vehicle width direction is formed in a substantially L shape, and the side portion 11c of the main frame 11 is extended at least between the connection portion 40 between the inner panel 10 and the hinge 6 and the lower corner portion 10D of the rear surface portion 10B. In other words, in the upper surface portion 10A of the inner panel 10, the connection portion 40, to which the hinge 6 is connected, is a portion that corresponds to the side portion 11c of the main frame 11 of the inner panel 10.

The auxiliary frames 12 to 15 are framework members that are provided inside the main frame 11 that is provided along the outer periphery of the inner panel 10. Herein, although the auxiliary frames 12 to 15 are each denoted by names and numerals, and the description will be made by dividing the frames into a first auxiliary frame 12, a central frame 13, a second auxiliary frame 14 and a third auxiliary frame 15, the auxiliary frames 12 to 15 may be integrally formed, and may be configured to include a plurality of separate members.

The first auxiliary frames (the auxiliary frames) 12 are respectively provided in both sides of the inner panel 10 in the vehicle width direction, the right first auxiliary frame 12 and the left first auxiliary frame 12 are symmetrical using a center of the inner panel 10 in the vehicle width direction as a central line. The first auxiliary frame 12 includes an upper surface oblique side portion 12a that is provided in the upper surface portion 10A and that is extended from the vicinity of the connection portion 40 to the inside in the vehicle width direction and to the rear side, and a rear surface oblique side portion 12b that is provided in the rear surface portion 10B and is extended from the vicinity of the side portion 11c of the main frame 11, which is extended to the rear surface portion 10B, to the inside in the vehicle width direction and to the upper side. Moreover, the upper surface oblique side portion 12a and the rear surface oblique side portion 12b are connected to each other in a boundary (that is, the upper surface rear end corner portion 10C) between the upper surface portion 10A and the rear surface portion 10B.

In other words, the first auxiliary frame 12 is bent and formed in a substantially V shape by the upper surface oblique side portion 12a and the rear surface oblique side portion 12b, one of them is extended from a bent corner portion 12C to the vicinity of the connection portion 40 along the upper surface portion 10A, and the other of them is extended to the vicinity of the side portion 11c of the main frame 11 along the rear surface portion 10B. That is, the first auxiliary frame 12 is configured so that one end portion 12A thereof is placed in the vicinity of the connection portion 40 that is the upper surface portion 10A, the other end portion 12B is placed in the vicinity of the side portion 11c of the main frame 11 that is the rear surface portion 10B, and the bent intermediate portion (the corner portion) 12C is placed in the upper surface rear end corner portion 10C.

Since the first auxiliary frame 12 has such a shape, substantially triangular frameworks are each formed at both sides on the upper surface portion 10A and the rear surface portion 10B of the inner panel 10 in the vehicle width direction by the side portion 11c of the main frame 11 and the first auxiliary frame 12.

The central frame 13 is extended in the vehicle width direction, and is connected to the connection portions (the corner portions of the first auxiliary frame 12 which is formed in a substantially V shape) between the upper surface oblique side portions 12a and 12a and the rear surface oblique side portions 12b and 12b of the left and right first auxiliary frames 12 and 12. That is, the central frame 13 is provided in the boundary (the upper surface rear end corner portion 10C) between the upper surface portion 10A and the rear surface portion 10B of the inner panel 10.

The second auxiliary frames 14 are provided in the rear surface portion 10B of the inner panel 10, are extended from an intermediate portion of the central frame 13 to the lower side, and are connected to the central frame 13 and the rear surface lower portion 11b of the main frame 11. Herein, two second auxiliary frames 14 are arranged in parallel at an interval in the vehicle width direction, and the latch 8 is placed therebetween. In addition, the latch 8 is illustrated by an alternate long and two short dashes line in Fig. 3.

The third auxiliary frame 15 is provided in the upper surface portion 10A of the inner panel 10, is extended from the intermediate portion of the central frame 13 to the front side, and is connected to the central frame 13 and the upper surface front portion 11a of the main frame 11. Herein, one third auxiliary frame 15 is provided in the center of the inner panel 10 in the vehicle width direction.

Thus, the auxiliary frames 12 to 15 are configured so that the first auxiliary frames 12 are connected to both end portions of the central frame 13, the second auxiliary frames 14 and 14 are connected to the lower side of the intermediate portion of the central frame 13, and the third auxiliary frame 15 is connected to the front side of the intermediate portion of the central frame 13, and constitute the framework of the inner panel 10 together with the main frame 11.

### 2-2. Structure of Connection Portion between Framework and Hinge

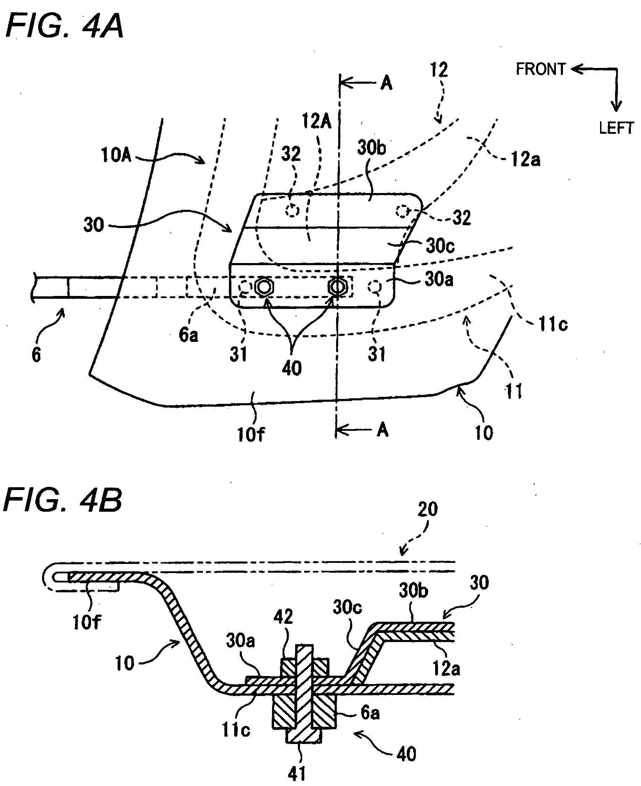

Next, a structure of the connection portion 40 between the inner panel 10 including the framework of the trunk lid 5 and the hinge 6, and a connection structure of the reinforcement 30 in the connection portion 40 will be described. In addition, although Figs. 4A and 4B illustrate the reinforcement 30 provided at the left side, the reinforcement 30 provided at the right side also has the same structure (a surface symmetry).

As illustrated in Figs. 3 4A and 4B, an upper surface of the fixing portion 6a of the hinge 6 comes into contact with the back surface of the upper surface portion 10A of the inner panel 10, and is fixed to the upper surface portion 10A of the inner panel 10 by bolts 41 and nuts 42. Herein, the inner panel 10 is fixed at two locations of the fixing portion 6a in a longitudinal direction of the fixing portion 6a. In other words, the connection portions 40 between the inner panel 10 and the hinge 6 are provided at two locations in the vehicle front and rear direction. At this time, the fixing portion 6a of the hinge 6 comes into contact with the back surface of the upper surface portion 10A which is provided with the side portion 11c of the main frame 11. That is, the hinge 6 is fixed to the side portion 11c of the main frame 11 by the bolts 41 and the nuts 42.

Furthermore, as mentioned above, the reinforcement 30 is connected to the connection portion 40 between the inner panel 10 and the hinge 6. The reinforcement 30 includes two plane portions 30a and 30b, which are different in height with each other, obtained by bending a rectangular plate-like member, and a slope portion 30c provided between the plane portions 30a and 30b. On a surface (an upper surface) of the plane portion 30a located below the plane portion 30b, the two nuts 42 each of which has an inner diameter corresponding to the bolt 41 for connecting the inner panel 10 and the hinge 6 are welded. The bolts 41 mentioned above are screwed into the two nuts 42 from the lower side. Thereby, as illustrated in Fig. 4B, the fixing portion 6a of the hinge 6 and the plane portion 30a of the reinforcement 30 are connected to each other in a state in which the main frame 11 of the inner panel 10 is interposed between the fixing portion 6a of the hinge 6 and the plane portion 30a of the reinforcement 30.

Furthermore, four corners of the reinforcement 30 are spot-welded to the upper surface (the surface) of the upper surface portion 10A of the inner panel 10. The reinforcement 30 includes two first joining portions 31 and 31 that are joined to the side portion 11c of the main frame 11, and two second joining portions 32 and 32 that are joined to the vicinity of the one end portion 12A of the upper surface oblique side portion 12a of the first auxiliary frame 12.

The two first joining portions 31 and 31 are provided at both ends of the plane portion 30a, and interpose the two connection portions 40 and 40 in the vehicle front and rear direction. That is, the first joining portions 31 and 31 and the connection portions 40 and 40 are provided on one straight line in the vehicle front and rear direction, and the first joining portions 31 and 31 are provided in front and rear of the connection portions 40 and 40, respectively. Furthermore, the two second joining portions 32 and 32 are provided at both ends of the plane portion 30b located above the plane portion 30a. In this way, the reinforcement 30 is a member that reinforcements the connection portion 40 between the inner panel 10 and the hinge 60, and is also a member that is connected to the main frame 11 and the first auxiliary fame 12 which are provided on the upper surface portion 10A.

In addition, as illustrated in Figs. 4A and 4B, the inner panel 10 related to the present embodiment is provided so that the first auxiliary frame 12 is projected to the upper side from the main frame 11 in the upper surface portion 10A. For this reason, the reinforcement 30, which is joined to the main frame 11 and the first auxiliary frame 12, is formed to have the two plane portions 30a and 30b which are different in height. Furthermore, the inner panel 10 is provided with a flange portion 10f in which both end portions in the vehicle width direction are extended obliquely upward toward the outside to join the end portion of the outer panel 20.

### 3. Effect

When performing the opening and closing operations of the trunk lid 5, the stress concentration is generated in the connection portion 40 between the inner panel 10 of the trunk lid 5 and the hinge 6 as mentioned above. On the contrary, according to the framework structure of the trunk lid 5 related to the present embodiment, it is possible to transmit the stress acting on the connection portion 40 to the main frame 11 extended between the connection portion 40 and the lower corner portion 10D of the rear surface portion 10B, and the first auxiliary frame 12 having the upper surface oblique side portion 12a that is extended from the vicinity of the connection portion 40 provided in the upper surface portion 10A to the inside in the vehicle width direction and to the rear side, along both edges of the inner panel 10 in the vehicle width direction. For that reason, it is possible to effectively disperse the stress from the main frame 11 and the first auxiliary frame 12 to the entire upper surface portion 10A of the inner panel 10.

Furthermore, the first auxiliary frame 12 includes the rear surface oblique side portion 12b that is provided in the rear surface portion 10B and is extended from the vicinity of the main frame 11 that is extended to the rear surface portion 10B to the inside in the vehicle width direction and to the upper side, and the rear surface oblique side portion 12b and the upper surface oblique side portion 12a are connected to each other in the boundary between the upper surface portion 10A and the rear surface portion 10B. Thus, it is possible to disperse the stress, which is transmitted to the upper surface oblique side portion 12a, to the rear surface portion 10B via the rear surface oblique side portion 12b. That is, it is possible to disperse the stress to the entire inner panel 10.

Furthermore, it is possible to improve torsional rigidity and bending rigidity of the vicinity of the lower corner portion of the rear surface portion 5B of the trunk lid 5 by the main frame 11 extended to the lower corner portion 10D of the rear surface portion 10B and the first auxiliary frame 12 including the rear surface oblique side portion 12b. Furthermore, the upper surface oblique side portion 12a and the rear surface oblique side portion 12b of the first auxiliary frame 12 are connected to each other in the boundary between the upper surface portion 10A and the rear surface portion 10B in the inside in the vehicle width direction. That is, the first auxiliary frame 12 is formed in a substantially V shape by the upper surface oblique side portion 12a and the rear surface oblique side portion 12b, and the inner panel 10 is provided with a substantially triangular framework by the main frame 11 provided along the edge of the inner panel 10 and the auxiliary first auxiliary frame 12 formed in a substantially V shape. Thus, it is possible to improve rigidity of the entire trunk lid 5. Furthermore, thereby it is possible to reduce the thickness of the inner panel 10, and it is possible to promote the cost reduction and weight lightening of the trunk lid 5.

Furthermore, since the reinforcement 30 connected to the hinge 6 with the main frame 11 interposed therebetween is provided in the connection portion 40 between the inner panel 10 and the hinge 6, it is possible to enhance rigidity of the connection portion 40 in which the stress is concentrated. Furthermore, the reinforcements 30 are each connected to the main frame 11 and the second auxiliary frame 12, and are in connect with the main frame 11 and the first auxiliary frame 12. Thus, it is possible to reliably disperse the stress acting on the connection portion 40 between the inner panel 10 and the hinge 6 to the main frame 11 and the first auxiliary frame 12 via the reinforcement 30. Furthermore, since the stress acting on the connection portion 40 can be basically dispersed to the entire inner panel 10 by the main frame 11 and the first auxiliary frame 12 as mentioned above, the reinforcement 30 may have a minimum size capable of being connected to the main frame 11 and the first auxiliary frame 12.

Furthermore, the first joining portions 31 and 31 by which the main frame 11 is joined to the reinforcement 30 are provided at two locations, and the first joining portions 31 and 31 are provided to interpose the connection portions 40 and 40 therebetween in the vehicle front and rear direction. Thus, it is possible to further enhance rigidity of the vicinity of the connection portion 40.

Furthermore, since there is provided the central frame 13 extended in the vehicle width direction that is connected to the connection portions 12C between the upper surface oblique side portions 12a and the lower surface oblique side portions 12b of the first auxiliary frames 12 and 12 provided in both sides of the inner panel 10 in the vehicle width direction, it is possible to more effectively disperse the stress, which is transmitted to the main frame 11 and the first auxiliary frame 12, to the entire inner panel 10 via the central frame 13. Furthermore, since the central frame 13 is provided in the boundary (that is, the upper surface rear end corner portion 10C) between the upper surface portion 10A and the rear surface portion 10B of the inner panel 10, it is possible to further improve rigidity of the trunk lid 5.

### 4. Other

Although the embodiment of the present invention has been described above, the present invention is not limited to the embodiment mentioned above but can be variously changed within a scope that does not depart from the gist of the present invention.

For example, in the embodiment mentioned above, although the main frame 11 is provided along the outer periphery of the inner panel 10, the main frame may be provided with at least a portion (that is, the side portions 11c and 11c mentioned above) that is extended between the connection portion 40 between the inner panel 10 and the hinge 6 and the lower corner portion 10D of the rear surface portion 10B along the both edges of the upper surface portion 10A and the rear surface portion 10B of the inner panel 10 in the vehicle width direction.

Furthermore, the portion in which the position of the central frame 13 is provided is not limited to the upper surface rear end corner portion 10C, but may be a portion in front or below of the upper surface rear end corner portion 10C. Furthermore, the number of the central frame 13 is not limited to one, but two central frames 13 may be extended in line in the vehicle width direction. In this case, the first auxiliary frames 12 and 12 provided in both sides of the inner panel 10 in the vehicle width direction are connected to the central frames, the connection locations thereof may not exist on the corner portion 12C.

Furthermore, the number of the second auxiliary frame 14 may be one, and in this case, it is preferable that the second auxiliary frame 14 is connected to the central frame 13 with the latch 8. That is, it is preferable to be connected to the central frame 13, which is connected to the first auxiliary frame 12, and the latch 8, via the second auxiliary frame. Thereby, a point (the connection portion 40), where the stress concentration is generated, and a point (near the latch 8), to which force is applied, are connected to each other, via the first auxiliary frame 12, the central frame 13 and the second auxiliary frame 14. That is, since force (stress) acting on the inner panel 10 is dispersed via the framework, it is possible to prevent the deformation of the portion of the inner panel 10 in which there is no framework. That is, it is possible to obtain the same effect as enhancing rigidity of the trunk lid 5.

Furthermore, although the reinforcement 30 in the embodiment mentioned above includes the two plane portions 30a and 30b which are different in height, and the slope portion 30c, by bending and forming the rectangular plate-like member, the shape of the reinforcement 30 is not limited thereto. For example, when viewed from the plane, the shape may be a trapezoidal shape in which the main frame 11 side provided with the first joining portions 31 and 31 are a long side, and the first auxiliary frame 12 side is a short side. Furthermore, since the two plane portions 30a and 30b which are different in height and the slope portion 30c are matched with the shape of the inner panel 10 as mentioned above, if the shape of the inner panel 10 is changed, naturally, the two plane portions 30a and 30b and the slope portion 30c can be suitably changed in accordance with the change of the shape of the inner panel 10.

Furthermore, the portion at which the reinforcement 30 is joined to the main frame 11 and the first auxiliary frame 12 is not limited to the aforementioned embodiment, and the number of the joining location is not also limited to two.

In addition, the connection portions 40 between the inner panel 10 and the hinge 6 are not limited two locations, if the hinge 6 can be reliably fixed to the inner panel 10, the connection portion may be one location, and three locations or more may be provided.

Furthermore, the outer shape of the trunk lid 5 and the shape of the hinge 6 are not limited to the shapes mentioned above, and are different from each other depending on the type of the automobile, the shape of the trunk 3 or the like.

## Claims

1. A framework structure of a trunk lid (5), the trunk lid (5) which includes an inner panel (10) that includes: an upper surface portion (10A) which covers an opening of a trunk (3) provided in a rear portion of a vehicle body (1) of an automobile from an upper side of the vehicle body (1); and a rear surface portion (10B) which covers the opening from a rear side of the vehicle body (1), a rear end of the upper surface portion (10A) being connected to an upper end of the rear surface portion (10B), the trunk lid (5) which is fixed to the rear portion of the vehicle body (1) via hinges (6) which are provided at both end portions in a vehicle width direction of a front side of the upper surface portion (10A) of the inner panel (10) and each of which is connected to the inner panel (10) at a connection portion (40), the trunk lid (5) which is operable to allow opening and closing of the opening of the trunk (3), **characterized in that**
the inner panel (10) includes: a main frame (11) that is extended between the connection portion (40) and a lower corner portion (10D) of the rear surface portion (10B) along both edges in the vehicle width direction of the upper surface portion (10A) and the rear surface portion (10B); and an auxiliary frame (12-15) that is disposed inside the main frame (11) in the vehicle width direction in the upper surface portion (10A) and the rear surface portion (10B), and
the auxiliary frame (12-15) includes a first auxiliary frame (12) that includes: an upper surface oblique side portion (12a) which is extended from a vicinity of the connection portion (40) to an inside in the vehicle width direction and to the rear side of the vehicle body (1), in the upper surface portion (10A); and a rear surface oblique side portion (12b) which is extended from a vicinity of the main frame (11), which is extended to the rear surface portion (10B), to the inside in the vehicle width direction and to the upper side of the vehicle body (1), in the rear surface portion (10B), and the upper surface oblique side portion (12a) and the rear surface oblique side portion (12b) are connected to each other in a boundary between the upper surface portion (10A) and the rear surface portion (10B).

2. The framework structure of the trunk lid (5) according to claim 1, **characterized in that**
the trunk lid (5) includes a reinforcement member (30), which is connected to the hinge (6) with the main frame (11) interposed between the reinforcement member (30) and the hinge (6) at the connection portion (40), in the upper surface portion (10A), and
the reinforcement member (30) includes: a first joining portion (31) that is joined to the main frame (11); and a second joining portion (32) that is joined to the first auxiliary frame (12).

3. The framework structure of the trunk lid (5) according to claim 2, **characterized in that**
the first joining portion (31) includes at least two joining portions, and
the at least two joining portions (31) are provided to interpose the connection portion (40) between the at least two joining portions (31) in a vehicle front and rear direction.

4. The framework structure of the trunk lid (5) according to any one of claims 1 to 3, **characterized in that**
the first auxiliary frame (12) includes two frames provided at both sides in the vehicle widthwise direction, and
the auxiliary frame (12-15) includes a central frame (13) that is connected to connection portions of the two frames at which the upper surface oblique side portion (12a) and the rear surface oblique side portion (12b) are connected to each other.

5. The framework structure of the trunk lid (5) according to claim 4, **characterized in that**
the central frame (13) is extended in the boundary between the upper surface portion (10A) and the rear surface portion (10B) in the vehicle width direction.

6. The framework structure of the trunk lid (5) according to claim 4, **characterized in that**
the trunk lid (5) includes a latch (8) for keeping a complete close state of the opening of the trunk (3), in the rear surface portion (10B), and
the auxiliary frame (12-15) includes a second auxiliary frame (14) that is connected to the central frame (13) and the latch (8).

7. The framework structure of the trunk lid (5) according to claim 4, **characterized in that**
the trunk lid (5) includes a latch (8) for keeping a complete close state of the opening of the trunk (3), in the rear surface portion (10B),
the auxiliary frame (12-15) includes two second auxiliary frames (14) that are connected to the central frame (13), and
the latch (8) is arranged between the two second auxiliary frames (14).

## Patentansprüche

1. Rahmenstruktur einer Heckklappe (5), wobei die Heckklappe (5) ein Innenpanel (10) aufweist, das aufweist: einen oberen Oberflächenabschnitt (10A), der eine Öffnung eines Kofferraums (3), der in einem hinteren Abschnitt einer Fahrzeugkarosserie (1) eines Automobils vorgesehen ist, von einer Oberseite der Fahrzeugkarosserie (1) abdeckt; und einen hinteren Oberflächenabschnitt (10B), der die Öffnung von einer Hinterseite der Fahrzeugkarosserie (1) abdeckt, wobei ein hinteres Ende des oberen Oberflächenabschnitts (10A) mit einem oberen Ende des hinteren Oberflächenabschnitts (10B) verbunden ist, wobei die Heckklappe (5) am hinteren Abschnitt der Fahrzeugkarosserie (1) über Gelenke (6) befestigt ist, die an beiden Endabschnitten in eine Fahrzeugbreitenrichtung einer Vorderseite des oberen Oberflächenabschnitts (10A) des Innenpanels (10) vorgesehen sind und von denen beide mit dem Innenpanel (10) an einem Verbindungsabschnitt (40) verbunden sind, wobei die Heckklappe (5) funktionsfähig ist, ein Öffnen und Schließen der Öffnung des Kofferraums (3) zu ermöglichen,
**dadurch gekennzeichnet, dass**
das Innenpanel (10) aufweist: einen Hauptrahmen (11), der sich zwischen dem Verbindungsabschnitt (40) und einem unteren Eckabschnitt (10D) des hinteren Oberflächenabschnitts (10B) längs beider Kanten in die Fahrzeugbreitenrichtung des oberen Oberflächenabschnitts (10A) und des hinteren Oberflächenabschnitts (10B) erstreckt; und einen Hilfsrahmen (12-15), der innerhalb des Hauptrahmens (11) in die Fahrzeugbreitenrichtung im oberen Oberflächenabschnitt (10A) und im hinteren Oberflächenabschnitt (10B) angeordnet ist, und
der Hilfsrahmen (12-15) einen ersten Hilfsrahmen (12) aufweist, der aufweist: einen schrägen Seitenabschnitt (12a) der oberen Oberfläche, der sich im oberen Oberflächenabschnitt (10A) aus einer Umgebung des Verbindungsabschnitts (40) zu einer Innenseite in die Fahrzeugbreitenrichtung und zur Hinterseite der Fahrzeugkarosserie (1) erstreckt; und einen schrägen Seitenabschnitt (12b) der hinteren Oberfläche, der sich im hinteren Oberflächenabschnitt (10B) aus einer Umgebung des Hauptrahmens (11), der sich zum hinteren Oberflächenabschnitt (10B) erstreckt, zur Innenseite in die Fahrzeugbreitenrichtung und zur Oberseite der Fahrzeugkarosserie (1) erstreckt, und der schräge Seitenabschnitt (12a) der oberen Oberfläche und der schräge Seitenabschnitt (12b) der hinteren Oberfläche an einer Begrenzung zwischen dem oberen Oberflächenabschnitt (10A) und dem hinteren Oberflächenabschnitt (10B) miteinander verbunden sind.

2. Rahmenstruktur der Heckklappe (5) nach Anspruch 1, **dadurch gekennzeichnet, dass** die Heckklappe (5) im oberen Oberflächenabschnitt (10A) ein Verstärkungselement (30) aufweist, das mit dem Gelenk (6) verbunden ist, wobei der Hauptrahmen (11) am Verbindungsabschnitt (40) zwischen dem Verstärkungselement (30) und dem Gelenk (6) angeordnet ist, und
das Verstärkungselement (30) einen ersten Zusammenfügungsabschnitt (31), der mit dem Hauptrahmen (11) zusammengefügt ist und einen zweiten Zusammenfügungsabschnitt (32) aufweist, der mit dem ersten Hilfsrahmen (12) zusammengefügt ist.

3. Rahmenstruktur der Heckklappe (5) nach Anspruch 2, **dadurch gekennzeichnet, dass** der erste Zusammenfügungsabschnitt (31) mindestens zwei Zusammenfügungsabschnitte aufweist, und
die mindestens zwei Zusammenfügungsabschnitte (31) vorgesehen sind, um den Verbindungsabschnitt (40) zwischen den mindestens zwei Zusammenfügungsabschnitten (31) in eine Fahrzeugvorwärts- und Rückwärtsrichtung anzuordnen.

4. Rahmenstruktur der Heckklappe (5) nach einem der Ansprüche 1 bis 3, **dadurch gekennzeichnet, dass**
der erste Hilfsrahmen (12) zwei Rahmen aufweist, die auf beiden Seiten in die Fahrzeugbreitenrichtung vorgesehen sind, und
der Hilfsrahmen (12-15) einen mittleren Rahmen (13) aufweist, der mit den Verbindungsabschnitten der beiden Rahmen verbunden ist, an denen der schräge Seitenabschnitt (12a) der oberen Oberfläche und der schräge Seitenabschnitt (12b) der hinteren Oberfläche miteinander verbunden sind.

5. Rahmenstruktur der Heckklappe (5) nach Anspruch 4, **dadurch gekennzeichnet, dass** sich der mittlere Rahmen (13) in der Begrenzung zwischen dem oberen Oberflächenabschnitt (10A) und dem hinteren Oberflächenabschnitt (10B) in die Fahrzeugbreitenrichtung erstreckt.

6. Rahmenstruktur der Heckklappe (5) nach Anspruch 4, **dadurch gekennzeichnet, dass** die Heckklappe (5) im hinteren Oberflächenabschnitt (10B) eine Verriegelung (8) zum Aufrechterhalten eines vollständig geschlossenen Zustands der Öffnung des Kofferraums (3) aufweist, und
der Hilfsrahmen (12-15) einen zweiten Hilfsrahmen (14) aufweist, der mit dem mittleren Rahmen (13) und der Verriegelung (8) verbunden ist.

7. Rahmenstruktur der Heckklappe (5) nach Anspruch 4, **dadurch gekennzeichnet, dass** die Heckklappe (5) im hinteren Oberflächenabschnitt (10B) eine Verriegelung (8) zum Aufrechterhalten eines vollständig geschlossenen Zustands der Öffnung des Kofferraums (3) aufweist,
der Hilfsrahmen (12-15) zwei zweite Hilfsrahmen (14) aufweist, die mit dem mittleren Rahmen (13) verbunden sind, und
die Verriegelung (8) zwischen den beiden zweiten Hilfsrahmen (14) angeordnet ist.

## Revendications

1. Structure d'encadrement d'un couvercle (5) de coffre, ledit couvercle (5) de coffre comprenant un panneau intérieur (10) qui comporte : une partie de surface supérieure (10A) recouvrant une ouverture d'un coffre (3) prévue à l'arrière de la caisse (1) d'une automobile depuis le haut de la caisse du véhicule (1) ; et une partie de surface arrière (10B) recouvrant l'ouverture depuis l'arrière de la caisse du véhicule (1), une extrémité arrière de la partie de surface supérieure (10A) étant reliée à une extrémité supérieure de la partie de surface arrière (10B), le couvercle (5) de coffre étant fixé à l'arrière de la caisse du véhicule (1) par des charnières (6) prévues sur les deux parties d'extrémité dans le sens de la largeur du véhicule à l'avant de la partie de surface supérieure (10A) du panneau intérieur (10), chacune d'entre elles étant raccordée au panneau intérieur (10) à un emplacement de connexion (40), le couvercle (5) de coffre pouvant être commandé pour permettre l'ouverture et la fermeture de l'ouverture du coffre (3), **caractérisée en ce que**
le panneau intérieur (10) comporte : un cadre principal (11) s'étendant entre les emplacement de connexion (40) et un coin inférieur (10D) de la partie de surface arrière (10B) le long des deux bords, dans le sens de la largeur du véhicule, de la partie de surface supérieure (10A) et de la partie de surface arrière (10B) ; et un cadre auxiliaire (12-15) disposé à l'intérieur du cadre principal (11), dans le sens de la largeur du véhicule, dans la partie de surface supérieure (10A) et la partie de surface arrière (10B), et **en ce que** le cadre auxiliaire (12-15) comprend un premier cadre auxiliaire (12) comportant : un côté oblique (12a) de surface supérieure s'étendant depuis un emplacement proche de l'emplacement de connexion (40) vers l'intérieur dans le sens de la largeur du véhicule et vers l'arrière de la caisse du véhicule (1), dans la partie de surface supérieure (10A) ; et un côté oblique (12b) de surface arrière s'étendant depuis un emplacement proche du cadre principal (11) situé vers la partie de surface arrière (10B), vers l'intérieur dans le sens de la largeur du véhicule et vers le haut de la caisse du véhicule (1), dans la partie de surface arrière (10B), le côté oblique (12a) de surface supérieure et le côté oblique (12b) de surface arrière étant reliés l'un à l'autre au niveau d'une limite entre la partie de surface supérieure (10A) et la partie de surface arrière (10B).

2. Structure d'encadrement de couvercle (5) de coffre selon la revendication 1, **caractérisée en ce que**
le couvercle (5) de coffre comprend un élément de renforcement (30) relié à la charnière (6), le cadre principal (11) étant intercalé entre l'élément de renforcement (30) et la charnière (6) à l'emplacement de connexion (40) dans la partie de surface supérieure (10A), et **en ce que**
l'élément de renforcement (30) comporte : un premier emplacement de jonction (31) raccordé au cadre principal (11) ; et un deuxième emplacement de jonction (32) raccordé au premier cadre auxiliaire (12).

3. Structure d'encadrement de couvercle (5) de coffre selon la revendication 2, **caractérisée en ce que**
le premier emplacement de jonction (31) comprend au moins deux emplacements de jonction, et **en ce que**
lesdits au moins deux emplacements de jonction (31) sont prévus pour intercaler l'emplacement de connexion (40) entre lesdits au moins deux emplacements de jonction (31) vers l'avant et vers l'arrière du véhicule.

4. Structure d'encadrement de couvercle (5) de coffre selon l'une des revendications 1 à 3, **caractérisée en ce que**
le premier cadre auxiliaire (12) comprend deux cadres prévus sur les deux côtés dans le sens de la largeur du véhicule, et **en ce que**
le cadre auxiliaire (12-15) comporte un cadre central (13) raccordé à des emplacements de connexion des deux cadres où le côté oblique (12a) de surface supérieure et le côté oblique (12b) de surface arrière sont raccordés l'un à l'autre.

5. Structure d'encadrement de couvercle (5) de coffre selon la revendication 4, **caractérisée en ce que**
le cadre central (13) s'étend au niveau de la limite entre la partie de surface supérieure (10A) et la partie de surface arrière (10B) dans le sens de la largeur du véhicule.

6. Structure d'encadrement de couvercle (5) de coffre selon la revendication 4, **caractérisée en ce que**
le couvercle (5) de coffre comporte un élément de verrouillage (8) destiné à maintenir un état de fermeture complète de l'ouverture du coffre (3) dans la partie de surface arrière (10B), et **en ce que**
le cadre auxiliaire (12 -15) comporte un deuxième cadre auxiliaire (14) raccordé au cadre central (13) et à l'élément de verrouillage (8).

7. Structure d'encadrement de couvercle (5) de coffre selon la revendication 4, **caractérisée en ce que**
le couvercle (5) de coffre comporte un élément de verrouillage (8) destiné à maintenir un état de fermeture complète de l'ouverture du coffre (3) dans la partie de surface arrière (10B),
le cadre auxiliaire (12 -15) comporte deux deuxièmes cadres auxiliaires (14) raccordés au cadre central (13), et **en ce que**
l'élément de verrouillage (8) est disposé entre les deux deuxièmes cadres auxiliaires (14).
